# EUROPEAN PATENT APPLICATION

(11) **EP 4 832 100 A1**
(43) Date of publication of application: **28.10.2026**
(21) Application number: 24908055.7
(22) Date of filing: 18.12.2024
(51) Int. Cl.: H01M 4/505, H01M 4/525, H01M 4/131, H01M 10/052, H01M 4/02

(54) **CATHODE ACTIVE MATERIAL FOR LITHIUM SECONDARY BATTERY, AND LITHIUM SECONDARY BATTERY COMPRISING SAME**

(30) Priority: 18.12.2023 KR 20230185040
(71) Applicant: POSCO Holdings Inc., Pohang-si, Gyeongsangbuk-do 37859 (KR); Research Institute of Industrial Science & Technology, Pohang-si, Gyeongsangbuk-do 37673 (KR)
(72) Inventor: SONG, Jun-Hyuk, Seoul 06516 (KR); NAM, Sang Cheol, Seoul 02587 (KR); YU, Byongyong, Incheon 22003 (KR); CHOI, Geunho, Incheon 21525 (KR); LEE, Hayeon, Goyang-si, Gyeonggi-do 10378 (KR); CHOI, Sol, Incheon 21986 (KR); KIM, Jieun, Incheon 21641 (KR)
(74) Representative: Pfenning, Meinig & Partner mbB
(86) International application number: PCT/KR2024/020581
(87) International publication number: WO 2025/135772

(57) **Abstract**

The present invention relates to a positive electrode active material for a lithium secondary battery, comprising a lithium metal oxide having a lithium- and manganese-rich composition, wherein the lithium metal oxide has a structure in which lithium layers and transition metal layers are alternately stacked, an average spacing between the lithium layers is 2.13 Å or more, and the lithium metal oxide has a molar ratio of cobalt to metals excluding lithium of 0.05 or less.

## Description

### [TECHNICAL FIELD]

The present invention relates to a positive electrode active material for a lithium secondary battery and a lithium secondary battery including the same.

### [BACKGROUND ART]

As the range of applications of lithium secondary batteries has expanded from small electronic devices to electric vehicles, power storage devices, and the like, demand for positive electrode materials having excellent high energy density and high output characteristics has increased.

A lithium-rich layered lithium transition metal oxide has a very high capacity of 240 mAh/g or more, and thus has attracted attention as a candidate group for next-generation positive electrode active materials, and research thereon has recently been actively conducted.

However, compared with conventional positive electrode materials, a lithium-rich layered lithium transition metal oxide utilizes oxidation/reduction reactions of oxygen in addition to oxidation/reduction of transition metals due to the high lithium content and relatively low transition metal ratio in the structure. Since these oxidation/reduction reactions of oxygen are driven at a high voltage during first charging, electrolyte decomposition is caused by high reactivity with the electrolyte solution at the surface, and irreversible migration of transition metals occurs. Accordingly, the number of lithium reinsertion sites during discharge decreases, thereby reducing initial efficiency, and thereafter, as cycles proceed, phase decomposition due to oxygen gas generation and transition metal dissolution is accelerated, thereby causing deterioration of lifespan characteristics.

### [DETAILED DESCRIPTION OF THE INVENTION]

### [Technical Problem]

Accordingly, an object of the present invention is to provide a positive electrode active material for a lithium secondary battery, which is a lithium-rich layered lithium metal oxide and has not only excellent capacity but also improved initial efficiency and lifespan characteristics, and a lithium secondary battery including the same.

### [Technical Solution]

One embodiment of the present invention provides a positive electrode active material for a lithium secondary battery, comprising a lithium metal oxide having a lithium- and manganese-rich composition, wherein the lithium metal oxide has a structure in which lithium layers and transition metal layers are alternately stacked, an average spacing between the lithium layers is 2.13 Å or more, and the lithium metal oxide has a molar ratio of cobalt to metals excluding lithium of 0.05 or less.

The lithium metal oxide may have a molar ratio of lithium to the lithium metal oxide of 1.1 to 1.3.

The lithium metal oxide may have a molar ratio of manganese to metals excluding lithium of 0.55 to 0.7.

After first full charge, the lithium metal oxide may have a transition metal ratio in the lithium layers of 8.0% or less.

The lithium metal oxide may be doped with a transition metal element having no valence electron in a d orbital (dopant).

A stabilization energy of the dopant in the lithium layers may be less than 0 eV.

The transition metal element having no valence electron in a d orbital may be Al, Ti, Nb, Ta, W, Mo, or a combination thereof.

The transition metal element having no valence electron in a d orbital may be more heavily doped into the lithium layers among the lithium layers and the transition metal layers.

A content of the transition metal element having no valence electron in a d orbital may be 0.2 mol% to 1 mol% based on a total number of moles of metals excluding lithium.

The lithium metal oxide may have a molar ratio of nickel to metals excluding lithium of 0.3 to 0.45.

The lithium metal oxide may include a first lithium metal oxide and a second lithium metal oxide, and an average particle diameter (D50) of the first lithium metal oxide may be greater than an average particle diameter (D50) of the second lithium metal oxide.

The lithium metal oxide may be represented by the following Chemical Formula 1.

[Chemical Formula 1] Li₁₊ₐ(NiₓCo_{y}Mn_{z}M1_{w1}M2_{w2})₁₋ₐO₂

In Chemical Formula 1, 0.1≤a≤0.3, 0.3≤x≤0.45, 0≤y≤0.05, 0.55≤z≤0.7, 0.002≤w1≤0.01, 0≤w2≤0.01, x+y+z+w1+w2=1, M1 is Al, Ti, Nb, Ta, W, Mo, or a combination thereof, and M2 is Zr, B, Y, Mg, Sc, Si, V, Fe, Ce, Hf, La, Sr, Sn, Sb, Zn, Cu, Ge, Ru, Ir, or a combination thereof.

Another embodiment of the present invention provides a positive electrode for a lithium secondary battery, comprising the above-described positive electrode active material.

Still another embodiment of the present invention provides a lithium secondary battery comprising the positive electrode for a lithium secondary battery.

### [Advantageous Effects]

The positive electrode active material for a lithium secondary battery according to an embodiment of the present invention is a lithium metal oxide having a lithium-rich composition and has excellent capacity, and initial efficiency and lifespan characteristics may be improved as structural stability is improved due to an increased spacing between lithium layers.

### [BRIEF DESCRIPTION OF THE DRAWINGS]

FIG. 1 is a cross-sectional SEM image after FIB milling of a positive electrode active material prepared according to Example 1.
FIG. 2 is a cross-sectional SEM image after FIB milling of a positive electrode active material prepared according to Example 2.
FIG. 3 is a cross-sectional SEM image after FIB milling of a positive electrode active material prepared according to Example 3.
FIG. 4 is a cross-sectional SEM image after FIB milling of a positive electrode active material prepared according to Example 4.
FIG. 5 is a cross-sectional SEM image after FIB milling of a positive electrode active material prepared according to Example 5.
FIG. 6 is a cross-sectional SEM image after FIB milling of a positive electrode active material prepared according to Example 6.

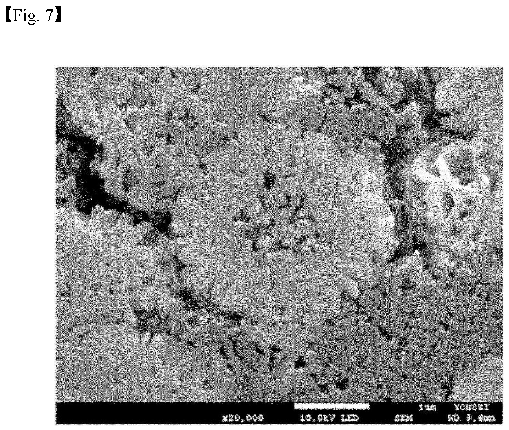

FIG. 7 is a cross-sectional SEM image after FIB milling of a positive electrode active material prepared according to Comparative Example 1.
FIG. 8 is a graph showing evaluation results of initial charge capacity, initial discharge capacity, and initial efficiency of lithium secondary batteries according to Experimental Example 2.
FIG. 9 is a graph showing evaluation results of lifespan characteristics of lithium secondary batteries according to Experimental Example 2.
FIG. 10 is a graph showing evaluation results of Mn dissolution amounts after 50 cycles according to Experimental Example 3.
FIG. 11 is a graph showing evaluation results of Ni dissolution amounts after 50 cycles according to Experimental Example 3.

### [MODE FOR CARRYING OUT THE INVENTION]

Terms such as first, second, and third are used to describe various parts, components, regions, layers, and/or sections, but are not limited thereto. These terms are used only to distinguish one part, component, region, layer, or section from another part, component, region, layer, or section. Accordingly, a first part, component, region, layer, or section described below may be referred to as a second part, component, region, layer, or section without departing from the scope of the present invention.

The terminology used herein is merely for referring to particular embodiments and is not intended to limit the present invention. As used herein, singular forms also include plural forms unless the context clearly indicates otherwise. As used in the specification, the term "comprising" specifies stated features, regions, integers, steps, operations, elements, and/or components, and does not exclude the presence or addition of other features, regions, integers, steps, operations, elements, and/or components.

When a part is referred to as being "above" or "on" another part, it may be directly above or on the other part, or another part may be interposed therebetween. In contrast, when a part is referred to as being "directly above" another part, no other part is interposed therebetween.

Although not otherwise defined, all terms used herein, including technical and scientific terms, have the same meanings as commonly understood by a person having ordinary skill in the art to which the present invention pertains. Terms defined in commonly used dictionaries are further interpreted as having meanings consistent with the related technical literature and the presently disclosed content, and unless defined otherwise, are not interpreted in an idealized or overly formal sense.

In addition, unless otherwise specifically stated, % means wt%, and 1 ppm means 0.0001 wt%.

In the present specification, the term "combination(s) thereof" described in a Markush-type expression means one or more mixtures or combinations selected from the group consisting of the components described in the Markush-type expression, and means that one or more selected from the group consisting of the components is included.

Hereinafter, embodiments of the present invention will be described in detail so that a person having ordinary skill in the art to which the present invention pertains can easily practice the present invention. However, the present invention may be embodied in various different forms and is not limited to the embodiments described herein.

### 1. Positive Electrode Active Material

A positive electrode active material for a lithium secondary battery according to an embodiment of the present invention includes a lithium metal oxide having a lithium- and manganese-rich composition. A lithium transition metal oxide having a lithium- and manganese-rich composition has a low nickel content, but can involve oxidation/reduction reactions of not only transition metals but also anions (oxygen) during battery operation. In addition, excess lithium may be present in a transition metal layer as well as in a lithium layer, and thus insertion and deinsertion efficiency of lithium ions can be increased. Accordingly, the initial discharge capacity may be 240 mAh/g or more, and capacity characteristics can be remarkably improved compared with a positive electrode material having a conventional NCM composition. In addition, since the contents of relatively expensive nickel and cobalt can be reduced and the content of inexpensive manganese can be increased, economic feasibility is excellent.

More specifically, the lithium metal oxide may have a molar ratio of lithium to the lithium metal oxide of 1.1 to 1.3. As the molar ratio of lithium to the lithium metal oxide increases, the amount of lithium capable of participating in insertion and deinsertion of lithium ions increases, and capacity characteristics may be improved. However, when the molar ratio of lithium to the lithium metal oxide is excessively large, phase stability problems may occur due to excessive occurrence of oxygen oxidation/reduction reactions, and lifespan characteristics may deteriorate due thereto.

In addition, the lithium metal oxide may have a molar ratio of manganese to metals excluding lithium of 0.55 to 0.7. When the content of manganese is excessively small, manufacturing costs increase, active material safety decreases, and the capacity-improving effect due to containing an excessive amount of manganese may be insignificant. When the content of manganese is excessively large, lifespan characteristics may deteriorate due to excessive use of oxygen oxidation/reduction reactions, and manganese may be dissolved.

In addition, the lithium metal oxide may have a molar ratio of nickel to metals excluding lithium of 0.3 to 0.45. When the nickel content satisfies the above range, capacity, output, and lifespan characteristics of the battery may be more preferably implemented. More specifically, when the nickel content is excessively small, the amount of oxygen oxidation/reduction reactions excessively increases, and lifespan characteristics may deteriorate. When the nickel content is excessively large, the amount of oxygen oxidation/reduction reactions decreases, and capacity and output characteristics may deteriorate.

Meanwhile, the lithium transition metal oxide according to an embodiment of the present invention is in the form of secondary particles formed by aggregation of a plurality of primary particles. In the present specification, "primary particle" means a minimum particle unit distinguished as one lump when a cross-section of a positive electrode active material is observed through a scanning electron microscope (SEM), and may be composed of one crystal grain or may be composed of a plurality of crystal grains. In the present specification, "crystal grain" means a distinguishable region in which atoms in a primary particle form a lattice structure in a predetermined direction. At this time, the lithium transition metal oxide according to the present invention may include a hollow in the secondary particle, and the primary particles may have a box-like, spherical, or plate-like shape.

However, compared with a conventional positive electrode active material, the lithium metal oxide having the above composition utilizes oxidation/reduction reactions of oxygen in addition to oxidation/reduction of transition metals due to the high lithium content and relatively low transition metal ratio in the structure. Since these oxidation/reduction reactions of oxygen are driven at a high voltage during first charging, electrolyte decomposition is caused by high reactivity with the electrolyte solution at the surface, and irreversible migration of transition metals occurs. Accordingly, the number of lithium reinsertion sites during discharge decreases, thereby reducing initial efficiency, and thereafter, as cycles proceed, generation of oxygen gas is accelerated, thereby causing deterioration of lifespan characteristics.

Accordingly, the lithium metal oxide according to the present invention has a structure in which lithium layers and transition metal layers are alternately stacked, and an average spacing between the lithium layers is controlled to be 2.13 Å or more.

In a conventional lithium metal oxide having a conventional composition, so-called cation mixing, in which transition metals are partially substituted into lithium layers immediately after synthesis, occurs, but the amount of such cation mixing does not change as charging and discharging proceed.

In contrast, in the lithium metal oxide having a lithium- and manganese-rich composition, from the point at which oxygen oxidation/reduction is utilized during charging, a large amount of transition metals (nickel, cobalt, manganese, and the like) in the transition metal layers migrate into the lithium layers and, at the same time as discharge, migrate back to the original transition metal layers. That is, as charging and discharging proceed, a large amount of transition metals repeatedly migrate between the lithium layers and the transition metal layers. However, since such migration of transition metals according to charging and discharging is difficult to return completely reversibly to the original layers, some transition metals irreversibly accumulate in the lithium layers according to repeated cycles, and irreversible capacity increases accordingly, which causes changes in electrochemical characteristics, such as reduced initial efficiency due to an increase in irreversible capacity in the battery and deterioration of lifespan characteristics due to decreased structural stability.

In contrast, in the lithium metal oxide according to the present invention, since the average spacing between lithium layers is sufficiently large, migration of transition metals between the lithium layers and the transition metal layers according to charging and discharging can be suppressed. Accordingly, initial efficiency and lifespan characteristics of the battery can be improved.

Meanwhile, the "average spacing between lithium layers" in the lithium metal oxide may be measured by XRD and computational chemistry methods.

In addition, after first full charge, the lithium metal oxide may have a transition metal ratio in the lithium layers of 8.0% or less. That is, as described above, in the lithium metal oxide according to the present invention, the average spacing between lithium layers is controlled to be large, and thus migration of transition metals (nickel, cobalt, manganese, and the like) in the transition metal layers into the lithium layers during charging can be suppressed. Accordingly, after first full charge, the ratio of transition metals in the lithium layers may be sufficiently low as in the above range, and as a result, initial efficiency and lifespan characteristics of the battery can be improved. Meanwhile, the "transition metal ratio in the lithium layers" may be measured by XRD analysis.

The lithium metal oxide may be doped with a transition metal element having no valence electron in a d orbital (hereinafter also referred to as a "dopant" in the present specification). A transition metal element having no valence electron in a d orbital has a larger ionic radius than nickel, cobalt, or manganese. In addition, when doped into the lithium metal oxide, positioning in the lithium layers among the lithium layers and the transition metal layers is energetically stable, and thus doping into the lithium layers occurs more easily. Accordingly, as the lithium metal oxide is doped with a transition metal element having no valence electron in a d orbital, the spacing between lithium layers can be increased, and migration of nickel, cobalt, or manganese in the transition metal layers into the lithium layers can be suppressed. As a result, structural stability of the lithium metal oxide can be improved, and initial efficiency and lifespan characteristics of the battery can be improved.

More specifically, the transition metal element having no valence electron in a d orbital may be Al, Ti, Nb, Ta, W, Mo, or a combination thereof, but is not necessarily limited thereto.

In addition, the transition metal element having no valence electron in a d orbital may be more heavily doped into the lithium layers among the lithium layers and the transition metal layers. Such doping site preference can be confirmed by a computational chemistry method.

Accordingly, the stabilization energy of the dopant in the lithium layers may be less than 0 eV. Since the stabilization energy of the dopant in the lithium layers is sufficiently small as described above, the dopant may prefer to be positioned in the lithium layers, thereby maintaining a wide interplanar distance. As a result, structural stability of the lithium layers is improved, migration of transition metals between the lithium layers and the transition metal layers according to charging and discharging can be suppressed, and consequently initial efficiency and lifespan characteristics of the battery can be improved. Meanwhile, the stabilization energy of the dopant in the lithium layers may be measured by a computational chemistry method.

In addition, a content of the transition metal element having no valence electron in a d orbital may be 0.2 mol% to 1 mol%, and more specifically 0.2 mol% to 0.8 mol%, based on a total number of moles of metals excluding lithium. When the content of the transition metal element having no valence electron in a d orbital is excessively small, the above-described doping effect, that is, the effect of improving initial efficiency and lifespan characteristics of the battery, may be insignificant. When the content of the transition metal element having no valence electron in a d orbital is excessively large, the element is not effectively inserted into the structure but is present as an impurity, and initial efficiency and lifespan characteristics of the battery may rather deteriorate.

In particular, the lithium metal oxide according to the present invention has a molar ratio of cobalt to metals excluding lithium of 0.05 or less, more specifically 0.03 or less, 0.01 or less, or may contain no cobalt. Cobalt is generally added in a predetermined amount to improve lifespan and output characteristics of a battery by improving structural stability of a lithium metal oxide, but is problematic in that it is expensive. In the lithium metal oxide according to the present invention, as described above, the average spacing between lithium layers is controlled by the dopant, and thus the effect achieved by addition of cobalt can be substituted. Therefore, even when the cobalt content is reduced as in the above range, electrochemical characteristics can be suitably implemented. In addition, the present inventors confirmed that, when the cobalt content is excessively high, when the dopant is applied, the average spacing between lithium layers of the lithium metal oxide is rather narrowed, and after first full charge, the transition metal ratio in the lithium layers becomes excessively high, thereby deteriorating structural stability of the active material. The present inventors believe that this is because the presence of cobalt ions hinders effective insertion of the dopant into the lithium layers. This result is considered to be a noteworthy phenomenon compared with conventional technologies in which cobalt has generally been introduced in a predetermined amount or more even though it is expensive in order to improve lifespan characteristics of an active material.

Meanwhile, the lithium metal oxide may include a first lithium metal oxide and a second lithium metal oxide, and an average particle diameter (D50) of the first lithium metal oxide may be greater than an average particle diameter (D50) of the second lithium metal oxide. Accordingly, positive electrode mixture density can be improved, and battery energy density can be improved. In the present specification, average particle diameter (D50) may be defined as a particle diameter corresponding to 50% of a volume cumulative amount in a particle diameter distribution curve of particles. The average particle diameter (D50) may be measured, for example, using a laser diffraction method.

The lithium metal oxide may be represented by the following Chemical Formula 1.

[Chemical Formula 1] Li₁₊ₐ(NiₓCo_{y}Mn_{z}M1_{w1}M2_{w2})₁₋ₐO₂

In Chemical Formula 1, 0.1≤a≤0.3, 0.3≤x≤0.45, 0≤y≤0.05, 0.55≤z≤0.7, 0.002≤w1≤0.01, 0≤w2≤0.01, x+y+z+w1+w2=1, M1 is Al, Ti, Nb, Ta, W, Mo, or a combination thereof, and M2 is Zr, B, Y, Mg, Sc, Si, V, Fe, Ce, Hf, La, Sr, Sn, Sb, Zn, Cu, Ge, Ru, Ir, or a combination thereof.

In the lithium transition metal oxide of Chemical Formula 1, lithium may be included in an amount corresponding to 1+a, wherein a may satisfy 0.1≤a≤0.3. When a is excessively small, the effect of improving capacity characteristics due to an excessive lithium content may be insignificant. However, when a is excessively large, lifespan characteristics may deteriorate due to decreased phase stability.

In the lithium transition metal oxide of Chemical Formula 1, nickel may be included in an amount corresponding to x, that is, 0.3≤x≤0.45. When the nickel content is excessively small, the amount of oxygen oxidation/reduction reactions excessively increases, and lifespan characteristics may deteriorate. When the nickel content is excessively large, the amount of oxygen oxidation/reduction reactions decreases, and capacity and output characteristics may deteriorate.

In the lithium transition metal oxide of Chemical Formula 1, cobalt may be included in an amount corresponding to y, that is, 0≤y≤0.05 or 0≤y≤0.02. When the cobalt content is excessively small, sufficient rate characteristics may be difficult to achieve. When the cobalt content is excessively large, the cost of raw materials increases overall and reversible capacity may decrease.

In the lithium transition metal oxide of Chemical Formula 1, manganese may be included in an amount corresponding to z, that is, 0.55≤z≤0.7. When the manganese content is excessively small, production cost may increase and capacity may deteriorate. When the manganese content is excessively large, lifespan characteristics may deteriorate due to excessive use of oxygen oxidation/reduction reactions, and manganese dissolution may occur.

In the lithium transition metal oxide of Chemical Formula 1, M1, which is a doping element, may be included in an amount corresponding to w1, that is, 0.002≤w1≤0.01 or 0.002≤w1≤0.008. Here, M1 is Al, Ti, Nb, Ta, W, Mo, or a combination thereof.

In the lithium transition metal oxide of Chemical Formula 1, M2, which is another doping element, may be included in an amount corresponding to w2, that is, 0≤w2≤0.01. Here, M2 is Zr, B, Y, Mg, Sc, Si, V, Fe, Ce, Hf, La, Sr, Sn, Sb, Zn, Cu, Ge, Ru, Ir, or a combination thereof. M2, which is another doping element, may be included in an appropriate amount to implement another doping effect within a range in which electrochemical characteristics of the battery are not deteriorated.

### 2. Method for Manufacturing Positive Electrode Active Material

A method for manufacturing a positive electrode active material for a lithium secondary battery according to another embodiment of the present invention includes preparing a manganese-rich metal precursor having a molar ratio of manganese to total metals of 0.55 to 0.7; and mixing the metal precursor, a lithium raw material, and a doping raw material, and then calcining the mixture to form a lithium metal oxide having a lithium- and manganese-rich composition.

Hereinafter, the method for manufacturing a positive electrode active material for a lithium secondary battery according to another embodiment of the present invention will be described step by step.

First, a manganese-rich metal precursor having a molar ratio of manganese to total metals of 0.55 to 0.7 is prepared.

More specifically, the metal precursor may be a metal hydroxide.

The metal precursor may be prepared, for example, by adding a complexing agent-containing solution and a pH adjusting agent-containing solution to a metal-containing solution including a nickel raw material, a manganese raw material, and optionally a cobalt raw material to perform a coprecipitation reaction.

The nickel raw material is not particularly limited as long as it is used in the art for manufacturing a positive electrode active material precursor. For example, the nickel raw material may be a nickel-containing sulfate, acetate, nitrate, halide, sulfide, hydroxide, oxide, oxyhydroxide, or the like, and specifically may be NiSO₄, NiSO₄·6H₂O, Ni(OH)₂, NiO, NiOOH, NiCO₃·2Ni(OH)₂·4H₂O, NiC₂O₂·2H₂O, Ni(NO₃)₂·6H₂O, a fatty acid nickel salt, a nickel halide, or a combination thereof, but is not limited thereto.

The cobalt raw material is not particularly limited as long as it is used in the art for manufacturing a positive electrode active material precursor. For example, the cobalt raw material may be a cobalt-containing sulfate, acetate, nitrate, halide, sulfide, hydroxide, oxide, oxyhydroxide, or the like, and specifically may be CoSO₄, CoSO₄·7H₂O, Co(OH)₂, CoOOH, Co(OCOCH₃)₂·4H₂O, Co(NO₃)₂·6H₂O, or a combination thereof, but is not limited thereto.

The manganese raw material is not particularly limited as long as it is used in the art for manufacturing a positive electrode active material precursor. For example, the manganese raw material may be a manganese-containing sulfate, acetate, nitrate, halide, sulfide, hydroxide, oxide, oxyhydroxide, or a combination thereof, and specifically may be MnSO₄, MnCO₃, Mn(NO₃)₂, manganese acetate, a manganese dicarboxylate, manganese citrate, a manganese salt such as a fatty acid manganese salt, a manganese oxide such as Mn₂O₃, MnO₂, and Mn₃O₄, oxyhydroxide, manganese chloride, or a combination thereof, but is not limited thereto.

The metal-containing solution may be prepared by adding the nickel raw material, the manganese raw material, and optionally the cobalt raw material to a solvent, specifically water, or a mixture of water and an organic solvent uniformly miscible with water (for example, alcohol or the like).

The complexing agent-containing solution serves to form a complex, and may include, as a complexing agent, for example, NH₃, NH₄OH, (NH₄)₂SO₄, NH₄NO₃, NH₄Cl, CH₃COONH₄, NH₄CO₃, or a combination thereof, but is not limited thereto. Meanwhile, the complexing agent-containing solution may be used in the form of an aqueous solution, and in this case, water, or a mixture of water and an organic solvent uniformly miscible with water (for example, alcohol or the like) may be used as a solvent.

The pH adjusting agent-containing solution serves as a precipitant or pH adjuster, and may include an alkali compound such as a hydroxide of an alkali metal or alkaline earth metal, such as NaOH, KOH, or Ca(OH)₂, a hydrate thereof, or a combination thereof. Meanwhile, the pH adjusting agent-containing solution may also be used in the form of an aqueous solution, and in this case, water, or a mixture of water and an organic solvent uniformly miscible with water (for example, alcohol or the like) may be used as a solvent. At this time, the pH adjusting agent-containing solution may be added in an amount such that the pH of the reaction solution becomes 10 to 13.

The coprecipitation reaction may be performed under an inert atmosphere such as nitrogen or argon, at a temperature of 30°C to 70°C, and at a pH of 10 to 13.

By the above process, particles of a nickel-manganese(-cobalt) hydroxide are generated and precipitated in the reaction solution. The precipitated precursor particles may be separated according to a conventional method, washed with water, and dried to obtain a precursor. The precursor may be secondary particles formed by aggregation of primary particles.

At this time, the molar ratio of nickel, cobalt, and manganese in the precursor may be controlled by controlling the concentrations of the nickel raw material, the cobalt raw material, and the manganese raw material.

Accordingly, in the metal precursor, a molar ratio (Mn/M) of manganese (Mn) to metal (M) may be 0.55 to 0.7. In addition, in the metal precursor, a molar ratio (Ni/M) of nickel (Ni) to metal (M) may be 0.3 to 0.45. In addition, in the metal precursor, a molar ratio (Co/M) of cobalt (Co) to metal (M) may be 0.05 or less, more specifically 0.02 or less, and the metal precursor may contain no cobalt. The technical significance of controlling each metal content is the same as described above, and thus will be omitted.

Next, the metal precursor, a lithium raw material, and a doping raw material are mixed and then calcined to form a lithium metal oxide having a lithium- and manganese-rich composition.

At this time, the process may be performed such that a molar ratio (Li/Me) of lithium to total metals in the metal precursor is 1.1 or more. Since the molar ratio of lithium to total metals in the metal precursor satisfies the above range, a lithium metal oxide having a lithium-rich composition can be formed.

In addition, as the lithium raw material, a lithium-containing sulfate, nitrate, acetate, carbonate, oxalate, citrate, halide, hydroxide, oxyhydroxide, or the like may be used, and is not particularly limited as long as it can be dissolved in water. Specifically, the lithium raw material may be Li₂CO₃, LiNO₃, LiNO₂, LiOH, LiOH·H₂O, LiH, LiF, LiCl, LiBr, LiI, CH₃COOLi, Li₂O, Li₂SO₄, CH₃COOLi, Li₃C₆H₅O₇, or a combination thereof, but is not limited thereto.

In addition, the doping raw material may be a compound containing a transition metal element having no valence electron in a d orbital. For example, the doping raw material may be Al(OH)₃, Al₂O₃, TiO₂, Nb₂O₅, Ta₂O₅, WO₃, MoO₃, or a combination thereof, but is not necessarily limited thereto.

Of course, the doping raw material may further include a compound containing another doping element in addition to a compound containing a transition metal element having no valence electron in a d orbital. At this time, the other doping element may be Zr, B, Y, Mg, Sc, Si, V, Fe, Ce, Hf, La, Sr, Sn, Sb, Zn, Cu, Ge, Ru, Ir, or a combination thereof.

In particular, the doping raw material may have an average particle diameter (D50) of 400 nm or less, more specifically 300 nm or less or 200 nm or less. When the average particle diameter (D50) of the doping raw material is excessively large, even if the doping element in the doping raw material is appropriate, reactivity with the transition metal element-containing compound is very low, and thus the doping element is not sufficiently inserted into the crystal structure. Accordingly, the average spacing between lithium layers may be formed narrowly, and after full charge, the transition metal ratio in the lithium layers may be excessively high, thereby reducing the effect of improving structural stability of the active material.

In addition, the atmosphere during calcination is not particularly limited, but, for example, calcination may be performed in an air atmosphere. Accordingly, there may be an advantage of low process cost.

In addition, the calcination may be performed at a temperature of 820°C to 900°C. When the calcination temperature is excessively low, crystal grains do not grow, and there may be problems of deterioration of capacity, output, and lifespan characteristics. When the calcination temperature is excessively high, over-calcination occurs and crystal grains become enlarged, and output characteristics may deteriorate.

In addition, the calcination may be performed for 8 hours to 15 hours. When the calcination time is excessively short, crystal grains do not sufficiently grow and a layered structure is not formed, and thus capacity, output, and lifespan characteristics may deteriorate. When the calcination time is excessively long, calcination cost may greatly increase.

Accordingly, the lithium metal oxide having a lithium- and manganese-rich composition according to the present invention may be formed, and the lithium metal oxide having a lithium- and manganese-rich composition may suitably have physical properties, including the average spacing between lithium layers, within the ranges according to the present invention.

### 3. Positive Electrode and Lithium Secondary Battery

Still another embodiment of the present invention provides a positive electrode for a lithium secondary battery, comprising the above-described positive electrode active material.

More specifically, the positive electrode may include a positive electrode current collector and a positive electrode active material layer disposed on the positive electrode current collector and including the above-described positive electrode active material.

The positive electrode current collector is not particularly limited as long as it has conductivity without causing a chemical change in the battery, and examples thereof may include stainless steel, aluminum, nickel, titanium, calcined carbon, or aluminum or stainless steel surface-treated with carbon, nickel, titanium, silver, or the like. In addition, the positive electrode current collector may generally have a thickness of 3 µm to 500 µm, and fine irregularities may be formed on a surface of the positive electrode current collector to increase adhesion of the positive electrode active material. For example, the positive electrode current collector may be used in various forms such as a film, a sheet, a foil, a net, a porous body, a foam, and a nonwoven fabric.

The positive electrode active material layer may include a binder and/or a conductive material together with the above-described positive electrode active material.

At this time, the binder serves to improve adhesion between positive electrode active material particles and adhesion between the positive electrode active material and the positive electrode current collector. Specific examples thereof may include polyvinylidene fluoride (PVDF), a vinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, ethylene-propylene-diene monomer rubber (EPDM rubber), sulfonated-EPDM, styrene-butadiene rubber (SBR), fluorine rubber, or various copolymers thereof, and one thereof alone or a mixture of two or more thereof may be used, but the binder is not limited thereto. The binder may be included in an amount of 1 wt% to 30 wt% based on the total weight of the positive electrode active material layer.

The conductive material is used to impart conductivity to the electrode, and may be used without particular limitation as long as it has electron conductivity and does not cause a chemical change in the battery to be configured. Specific examples thereof may include graphite such as natural graphite or artificial graphite; carbon-based materials such as carbon black, acetylene black, Ketjen black, channel black, furnace black, lamp black, thermal black, and carbon fibers; metal powder or metal fibers such as copper, nickel, aluminum, and silver; conductive whiskers such as zinc oxide and potassium titanate; conductive metal oxides such as titanium oxide; or conductive polymers such as polyphenylene derivatives, and one thereof alone or a mixture of two or more thereof may be used, but the conductive material is not limited thereto. The conductive material may generally be included in an amount of 1 wt% to 30 wt% based on the total weight of the positive electrode active material layer.

The positive electrode may be manufactured according to a conventional method for manufacturing a positive electrode, except that the above-described positive electrode active material is used.

Specifically, the positive electrode may be manufactured by applying, onto a positive electrode current collector, a composition for forming a positive electrode active material layer including the above-described positive electrode active material and, as necessary, optionally including a binder, a conductive material, or a solvent, and then drying and rolling the same. At this time, the types and contents of the positive electrode active material, the binder, and the conductive material are as described above.

The solvent may be a solvent generally used in the art, and examples thereof may include dimethyl sulfoxide (DMSO), isopropyl alcohol, N-methylpyrrolidone (NMP), acetone, or water, and one thereof alone or a mixture of two or more thereof may be used. The amount of the solvent used is sufficient as long as it can dissolve or disperse the positive electrode active material, the conductive material, and the binder in consideration of a coating thickness and manufacturing yield of the slurry, and can provide a viscosity capable of exhibiting excellent thickness uniformity during subsequent coating for manufacturing the positive electrode.

Alternatively, the positive electrode may be manufactured by casting the composition for forming the positive electrode active material layer on a separate support, and then laminating a film obtained by peeling the composition from the support onto a positive electrode current collector.

Still another embodiment of the present invention provides a lithium secondary battery comprising the above-described positive electrode for a lithium secondary battery.

More specifically, the lithium secondary battery may include a positive electrode, a negative electrode, a separator, and an electrolyte.

The lithium secondary battery may optionally further include a battery case accommodating an electrode assembly of the positive electrode, the negative electrode, and the separator, and a sealing member sealing the battery case.

The negative electrode may include a negative electrode current collector and a negative electrode active material layer positioned on the negative electrode current collector.

The negative electrode current collector is not particularly limited as long as it has high conductivity without causing a chemical change in the battery, and examples thereof may include copper, stainless steel, aluminum, nickel, titanium, calcined carbon, copper or stainless steel surface-treated with carbon, nickel, titanium, silver, or the like, an aluminum-cadmium alloy, and the like. In addition, the negative electrode current collector may generally have a thickness of 3 µm to 500 µm, and like the positive electrode current collector, fine irregularities may be formed on a surface of the current collector to enhance bonding force of the negative electrode active material. For example, the negative electrode current collector may be used in various forms such as a film, a sheet, a foil, a net, a porous body, a foam, and a nonwoven fabric.

The negative electrode active material layer may optionally include a binder and a conductive material together with a negative electrode active material. As an example, the negative electrode active material layer may be manufactured by applying and drying, on a negative electrode current collector, a composition for forming a negative electrode active material layer including a negative electrode active material and optionally including a binder and a conductive material, or may be manufactured by casting the composition for forming the negative electrode on a separate support and then laminating a film obtained by peeling the composition from the support onto the negative electrode current collector.

As the negative electrode active material, a compound capable of reversible intercalation and deintercalation of lithium may be used. Specific examples thereof may include carbonaceous materials such as artificial graphite, natural graphite, graphitized carbon fibers, and amorphous carbon; metallic compounds capable of alloying with lithium, such as Si, Al, Sn, Pb, Zn, Bi, In, Mg, Ga, Cd, a Si alloy, a Sn alloy, or an Al alloy; metal oxides capable of doping and dedoping lithium, such as SiOβ (0<β<2), SnO₂, vanadium oxide, and lithium vanadium oxide; or composites including the metallic compound and a carbonaceous material, such as a Si-C composite or a Sn-C composite, and one thereof or a mixture of two or more thereof may be used. In addition, a metal lithium thin film may be used as the negative electrode active material. Further, as the carbon material, both low-crystalline carbon and high-crystalline carbon may be used. Representative examples of the low-crystalline carbon include soft carbon and hard carbon, and representative examples of the high-crystalline carbon include amorphous, plate-like, flake-like, spherical, or fibrous natural graphite or artificial graphite, Kish graphite, pyrolytic carbon, mesophase pitch-based carbon fibers, meso-carbon microbeads, mesophase pitches, and high-temperature calcined carbon such as petroleum or coal tar pitch-derived cokes.

The binder and the conductive material may be the same as those described above for the positive electrode.

The separator separates the negative electrode and the positive electrode and provides a movement path for lithium ions, and may be used without particular limitation as long as it is commonly used as a separator in lithium secondary batteries. In particular, a separator having low resistance to ion movement of the electrolyte and excellent electrolyte solution impregnation ability is preferable. Specifically, a porous polymer film, for example, a porous polymer film made of a polyolefin-based polymer such as an ethylene homopolymer, a propylene homopolymer, an ethylene/butene copolymer, an ethylene/hexene copolymer, or an ethylene/methacrylate copolymer, or a laminated structure having two or more layers thereof may be used. In addition, a conventional porous nonwoven fabric, for example, a nonwoven fabric made of high-melting-point glass fibers, polyethylene terephthalate fibers, or the like, may also be used. In addition, a coated separator including a ceramic component or a polymer material may be used to secure heat resistance or mechanical strength, and may optionally be used in a single-layer or multilayer structure.

Examples of the electrolyte may include an organic liquid electrolyte, an inorganic liquid electrolyte, a solid polymer electrolyte, a gel-type polymer electrolyte, a solid inorganic electrolyte, a molten-type inorganic electrolyte, and the like, which can be used when manufacturing a lithium secondary battery, but the electrolyte is not limited thereto.

Specifically, the organic liquid electrolyte may include an organic solvent and a lithium salt.

As the organic solvent, any solvent may be used without particular limitation as long as it can serve as a medium through which ions involved in an electrochemical reaction of the battery can move. Specifically, examples of the organic solvent may include ester-based solvents such as methyl acetate, ethyl acetate, γ-butyrolactone, and ε-caprolactone; ether-based solvents such as dibutyl ether and tetrahydrofuran; ketone-based solvents such as cyclohexanone; aromatic hydrocarbon-based solvents such as benzene and fluorobenzene; carbonate-based solvents such as dimethyl carbonate (DMC), diethyl carbonate (DEC), methyl ethyl carbonate (MEC), ethyl methyl carbonate (EMC), ethylene carbonate (EC), and propylene carbonate (PC); alcohol-based solvents such as ethyl alcohol and isopropyl alcohol; nitriles represented by R-CN, wherein R is a C2 to C20 linear, branched, or cyclic hydrocarbon group and may include a double-bond aromatic ring or an ether bond; amides such as dimethylformamide; dioxolanes such as 1,3-dioxolane; or sulfolanes. Among these, carbonate-based solvents are preferable, and a mixture of a cyclic carbonate having high ionic conductivity and high dielectric constant, which can improve charge/discharge performance of a battery, such as ethylene carbonate or propylene carbonate, and a low-viscosity linear carbonate-based compound, such as ethyl methyl carbonate, dimethyl carbonate, or diethyl carbonate, is more preferable. In this case, when the cyclic carbonate and the chain carbonate are mixed and used at a volume ratio of about 1:1 to about 1:9, excellent electrolyte performance may be exhibited.

The lithium salt may be used without particular limitation as long as it is a compound capable of providing lithium ions used in a lithium secondary battery. Specifically, as the lithium salt, LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, LiB(C₂O₄)₂, or the like may be used. The concentration of the lithium salt is preferably used within a range of 0.1 M to 2.0 M. When the concentration of the lithium salt is within the above range, the electrolyte has appropriate conductivity and viscosity, and thus excellent electrolyte performance can be exhibited and lithium ions can effectively move.

In addition to the above electrolyte components, the electrolyte may further include one or more additives, for example, for the purpose of improving lifespan characteristics of the battery, suppressing reduction in battery capacity, improving discharge capacity of the battery, and the like, such as a haloalkylene carbonate-based compound such as difluoroethylene carbonate, pyridine, triethyl phosphite, triethanolamine, cyclic ether, ethylene diamine, n-glyme, hexamethylphosphoric triamide, a nitrobenzene derivative, sulfur, a quinone imine dye, an N-substituted oxazolidinone, an N,N-substituted imidazolidine, ethylene glycol dialkyl ether, an ammonium salt, pyrrole, 2-methoxy ethanol, or aluminum trichloride. At this time, the additive may be included in an amount of 0.1 wt% to 5 wt% based on the total weight of the electrolyte.

As described above, since the lithium secondary battery including the positive electrode active material according to the present invention stably exhibits excellent discharge capacity, output characteristics, and capacity retention rate, the lithium secondary battery is useful for portable devices such as mobile phones, notebook computers, and digital cameras, and in the field of electric vehicles such as hybrid electric vehicles (HEVs).

Accordingly, still another embodiment of the present invention provides a battery module including the lithium secondary battery as a unit cell, and a battery pack including the same.

The battery module or battery pack may be used as a power source for one or more medium- to large-sized devices selected from power tools; electric vehicles including electric vehicles (EVs), hybrid electric vehicles, and plug-in hybrid electric vehicles (PHEVs); or power storage systems.

Hereinafter, embodiments of the present invention will be described in more detail through Examples. However, the following Examples are only preferred embodiments of the present invention, and the present invention is not limited by the following Examples.

### Example 1

### (1) Preparation of Positive Electrode Active Material

### 1) Preparation of First Lithium Metal Oxide (Large Particle Diameter)

(Preparation of Metal Precursor) A nickel cobalt manganese hydroxide was prepared using a 20 L coprecipitation reactor.

First, NiSO₄·6H₂O and MnSO₄·H₂O were dissolved in DI water at a molar ratio of 35:65 to prepare a 3 M metal salt aqueous solution.

Thereafter, the metal salt aqueous solution, NH₄(OH) as a complexing agent, and NaOH as a pH adjusting agent were introduced into the coprecipitation reactor to perform a coprecipitation reaction, thereby preparing a metal hydroxide. At this time, N₂ was purged to prevent oxidation of metal ions during the coprecipitation reaction, the temperature in the coprecipitation reactor was maintained at 30°C, and a metal hydroxide having an average particle diameter (D50) of 10 µm was prepared by controlling the coprecipitation reaction time.

Thereafter, the prepared metal hydroxide was filtered, washed with DI water, and then vacuum-dried in an oven at 110°C for 48 hours. Thus, a metal precursor having a composition of Ni_{0.35}Mn_{0.65}(OH)₂ was prepared.

(Preparation of Lithium Metal Oxide) Thereafter, LiOH·H₂O, Al(OH)₃, and the metal precursor were mixed such that a molar ratio of lithium to total metals in the metal precursor was 1.31 and a molar ratio of Al to total metals in the lithium metal oxide was 0.005, and then calcined at 900°C for 10 hours under an air atmosphere to prepare a first lithium metal oxide having an average particle diameter (D50) of 10 µm and a composition of Li_{1.13}Ni_{0.303}Mn_{0.562}Al_{0.004}O₂. At this time, the Al(OH)₃ powder as the doping raw material had an average particle diameter (D50) of 200 nm.

### 2) Preparation of Second Lithium Metal Oxide (Small Particle Diameter)

(Preparation of Metal Precursor) A nickel cobalt manganese hydroxide was prepared using a 20 L coprecipitation reactor.

First, NiSO₄·6H₂O, CoSO₄·6H₂O, and MnSO₄·H₂O were dissolved in DI water at a molar ratio of 35:65 to prepare a 3 M metal salt aqueous solution.

Thereafter, the metal salt aqueous solution, NH₄(OH) as a complexing agent, and NaOH as a pH adjusting agent were introduced into the coprecipitation reactor to perform a coprecipitation reaction, thereby preparing a metal hydroxide. At this time, N₂ was purged to prevent oxidation of metal ions during the coprecipitation reaction, the temperature in the coprecipitation reactor was maintained at 30°C, and a metal hydroxide having an average particle diameter (D50) of 3 µm was prepared by controlling the coprecipitation reaction time.

Thereafter, the prepared metal hydroxide was filtered, washed with DI water, and then vacuum-dried in an oven at 110°C for 48 hours. Thus, a metal precursor having a composition of Ni_{0.35}Mn_{0.65}(OH)₂ was prepared.

(Preparation of Lithium Metal Oxide) Thereafter, LiOH·H₂O, Al(OH)₃, and the metal precursor were mixed such that a molar ratio of lithium to total metals in the metal precursor was 1.31 and a molar ratio of Al to total metals excluding lithium in the lithium metal oxide was 0.005, and then calcined at 850°C for 10 hours under an air atmosphere to prepare a second lithium metal oxide having an average particle diameter (D50) of 3 µm and a composition of Li_{1.13}Ni_{0.303}Mn_{0.562}Al_{0.004}O₂. At this time, the Al(OH)₃ powder as the doping raw material had an average particle diameter (D50) of 200 nm.

### 3) Preparation of Positive Electrode Active Material

Thereafter, the first lithium metal oxide and the second lithium metal oxide were mixed at a weight ratio of 70:30 to prepare a positive electrode active material.

### (2) Manufacture of Lithium Secondary Battery

A slurry for manufacturing an electrode plate was prepared by mixing the prepared positive electrode active material, a conductive material (carbon black, Denka black), and a binder (PVDF, KF1100) at 92.5:3.5:4 wt%, and adding NMP (N-methyl-2-pyrrolidone) to adjust the viscosity such that a solid content was about 30%. The prepared slurry was coated on a 15 µm-thick Al foil using a doctor blade, and then dried and rolled. The electrode loading amount was 14.6 mg/cm², and the rolling density (25°C, 20 kN) was 3.1 g/cm³.

As the electrolyte solution, an electrolyte solution obtained by adding 1.0 wt% VC, 1 wt% FEC, and 0.5 wt% LiBF₄ based on the total amount of the electrolyte solution to 1 M LiPF₆ in EC:DMC:EMC=3:4:3 (vol%) was used, and a coin cell was manufactured using a PP separator and a lithium negative electrode (200 µm, Honzo Metal).

### Example 2

A positive electrode active material and a lithium secondary battery were prepared in the same manner as in Example 1, except that, when preparing the first lithium metal oxide and the second lithium metal oxide, TiO₂ was mixed instead of Al(OH)₃ such that a molar ratio of Ti to total metals excluding lithium in the lithium metal oxide was 0.005. At this time, the TiO₂ powder as the doping raw material had an average particle diameter (D50) of 200 nm.

### Example 3

A positive electrode active material and a lithium secondary battery were prepared in the same manner as in Example 1, except that, when preparing the first lithium metal oxide and the second lithium metal oxide, Nb₂O₅ was mixed instead of Al(OH)₃ such that a molar ratio of Nb to total metals excluding lithium in the lithium metal oxide was 0.005. At this time, the Nb₂O₅ powder as the doping raw material had an average particle diameter (D50) of 200 nm.

### Example 4

A positive electrode active material and a lithium secondary battery were prepared in the same manner as in Example 1, except that, when preparing the first lithium metal oxide and the second lithium metal oxide, Ta₂O₅ was mixed instead of Al(OH)₃ such that a molar ratio of Ta to total metals excluding lithium in the lithium metal oxide was 0.005. At this time, the Nb₂O₅ powder as the doping raw material had an average particle diameter (D50) of 200 nm.

### Example 5

A positive electrode active material and a lithium secondary battery were prepared in the same manner as in Example 1, except that, when preparing the first lithium metal oxide and the second lithium metal oxide, WO₃ was mixed instead of Al(OH)₃ such that a molar ratio of W to total metals excluding lithium in the lithium metal oxide was 0.005. At this time, the WO₃ powder as the doping raw material had an average particle diameter (D50) of 200 nm.

### Example 6

A positive electrode active material and a lithium secondary battery were prepared in the same manner as in Example 1, except that, when preparing the first lithium metal oxide and the second lithium metal oxide, MoO₃ was mixed instead of Al(OH)₃ such that a molar ratio of Mo to total metals excluding lithium in the lithium metal oxide was 0.005. At this time, the MoO₃ powder as the doping raw material had an average particle diameter (D50) of 200 nm.

### Example 7

A positive electrode active material and a lithium secondary battery were prepared in the same manner as in Example 1, except that, when preparing the first lithium metal oxide and the second lithium metal oxide, the precursor composition was Ni_{0.35}Co_{0.05}Mn_{0.6}(OH)₂, and TiO₂ was mixed instead of Al(OH)₃ such that a molar ratio of Ti to total metals excluding lithium in the lithium metal oxide was 0.005. At this time, the TiO₂ powder as the doping raw material had an average particle diameter (D50) of 200 nm.

### Comparative Example 1

A positive electrode active material and a lithium secondary battery were prepared in the same manner as in Example 1, except that Al(OH)₃ was not mixed when preparing the first lithium metal oxide and the second lithium metal oxide.

### Comparative Example 2

A positive electrode active material and a lithium secondary battery were prepared in the same manner as in Example 1, except that, when preparing the first lithium metal oxide and the second lithium metal oxide, Ni(OH)₂ was mixed instead of Al(OH)₃ such that a molar ratio of doped Ni to total metals excluding lithium in the lithium metal oxide was 0.005.

### Comparative Example 3

A positive electrode active material and a lithium secondary battery were prepared in the same manner as in Example 1, except that, when preparing the first lithium metal oxide and the second lithium metal oxide, Co(OH)₂ was mixed instead of Al(OH)₃ such that a molar ratio of doped Co to total metals excluding lithium in the lithium metal oxide was 0.005.

### Comparative Example 4

A positive electrode active material and a lithium secondary battery were prepared in the same manner as in Example 1, except that, when preparing the first lithium metal oxide and the second lithium metal oxide, Mn(OH)₂ was mixed instead of Al(OH)₃ such that a molar ratio of doped Mn to total metals excluding lithium in the lithium metal oxide was 0.005.

### Comparative Example 5

A positive electrode active material and a lithium secondary battery were prepared in the same manner as in Example 1, except that, when preparing the first lithium metal oxide and the second lithium metal oxide, Fe₂O₃ was mixed instead of Al(OH)₃ such that a molar ratio of Fe to total metals excluding lithium in the lithium metal oxide was 0.005.

### Comparative Example 6

A positive electrode active material and a lithium secondary battery were prepared in the same manner as in Example 1, except that, when preparing the first lithium metal oxide and the second lithium metal oxide, V₂O₅ was mixed instead of Al(OH)₃ such that a molar ratio of V to total metals excluding lithium in the lithium metal oxide was 0.005.

### Comparative Example 7

A positive electrode active material and a lithium secondary battery were prepared in the same manner as in Example 1, except that, when preparing the first lithium metal oxide and the second lithium metal oxide, Cr₂O₃ was mixed instead of Al(OH)₃ such that a molar ratio of Cr to total metals excluding lithium in the lithium metal oxide was 0.005.

### Comparative Example 8

A positive electrode active material and a lithium secondary battery were prepared in the same manner as in Example 2, except that, when preparing the first lithium metal oxide and the second lithium metal oxide, the molar ratio of Ti to total metals excluding lithium in the lithium metal oxide was 0.001.

### Comparative Example 9

A positive electrode active material and a lithium secondary battery were prepared in the same manner as in Example 2, except that, when preparing the first lithium metal oxide and the second lithium metal oxide, the composition of the metal precursor was changed to Ni_{0.37}Co_{0.13}Mn_{0.50}(OH)₂ to increase the cobalt content.

### Comparative Example 10

A positive electrode active material and a lithium secondary battery were prepared in the same manner as in Example 1, except that the average particle diameter (D50) of the TiO₂ powder as the doping raw material was changed to 800 nm.

Table 1 below summarizes process conditions of Examples and Comparative Examples.

**[Table 1]**

| | Lithium Metal Oxide Composition | Doping Element Type | Doping Element Content Based on Total Moles of Metals Excluding Lithium (mol%) | Co Content Based on Total Moles of Metals Excluding Lithium (mol%) | Avera ge Particl e Diame ter (D50) of Dopin g Raw Materi al (nm) |
|---|---|---|---|---|---|
| Ex. 1 | Li_{1.13}Ni_{0.303}Mn_{0.562}Al_{0.004}O₂ | Al | 0.5 | 0 | 200 |
| Ex. 2 | Li_{1.13}Ni_{0.303}Mn_{0.562}Ti_{0.004}O₂ | Ti | 0.5 | 0 | 200 |
| Ex. 3 | Li_{1.13}Ni_{0.303}Mn_{0.562}Nb_{0.004}O₂ | Nb | 0.5 | 0 | 200 |
| Ex. 4 | Li_{1.13}Ni_{0.303}Mn_{0.562}Ta_{0.004}O₂ | Ta | 0.5 | 0 | 200 |
| Ex. 5 | Li_{1.13}Ni_{0.303}Mn_{0.562}W_{0.004}O₂ | W | 0.5 | 0 | 200 |
| Ex. 6 | Li_{1.13}Ni_{0.303}Mn_{0.562}Mo_{0.004}O₂ | Mo | 0.5 | 0 | 200 |
| Ex. 7 | Li_{1.13}Ni_{0.260}Co_{0.042}Mn_{0.562}Ti_{0.004}O₂ | Ti | 0.5 | 5 | 200 |
| C-Ex. 1 | Li_{1.13}Ni_{0.304}Mn_{0.565}O₂ | - | - | 0 | - |
| C- Ex. 2 | Li_{1.13}Ni_{0.307}Mn_{0.562}O₂ | Ni | 0.5 | 0 | 200 |
| C-Ex. 3 | Li_{1.13}Ni_{0.303}Mn_{0.562}Co_{0.004}O₂ | Co | 0.5 | 0 | 200 |
| C-Ex. 4 | Li_{1.13}Ni_{0.303}Mn_{0.566}O₂ | Mn | 0.5 | 0 | 200 |
| C-Ex. 5 | Li_{1.13}Ni_{0.303}Mn_{0.562}Fe_{0.004}O₂ | Fe | 0.5 | 0 | 200 |
| C-Ex. 6 | Li_{1.13}Ni_{0.303}Mn_{0.562}V_{0.004}O₂ | V | 0.5 | 0 | 200 |
| C-Ex. 7 | Li_{1.13}Ni_{0.303}Mn_{0.562}Cr_{0.004}O₂ | Cr | 0.5 | 0 | 200 |
| C-Ex. 8 | Li_{1.13}Ni_{0.304}Mn_{0.565}Ti_{0.001}O₂ | Ti | 0.1 | 0 | 200 |
| C-Ex. 9 | Li_{1.13}Ni_{0.224}Co_{0.079}Mn_{0.562}Ti_{0.004}O₂ | Ti | 0.5 | 9 | 200 |
| C-Ex. 10 | Li_{1.13}Ni_{0.303}Mn_{0.562}Ti_{0.004}O₂ | Ti | 0.5 | 0 | 800 |

### Experimental Example 1: Cross-Sectional SEM Images of Positive Electrode Active Materials After FIB Milling

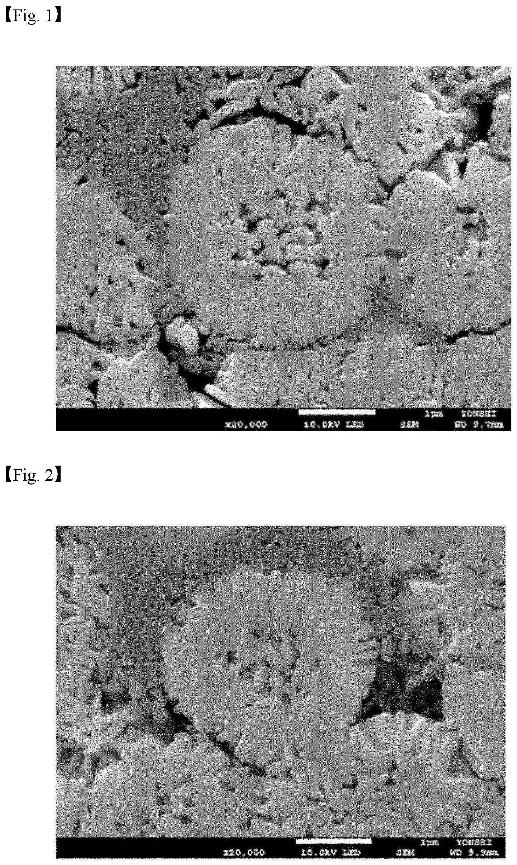

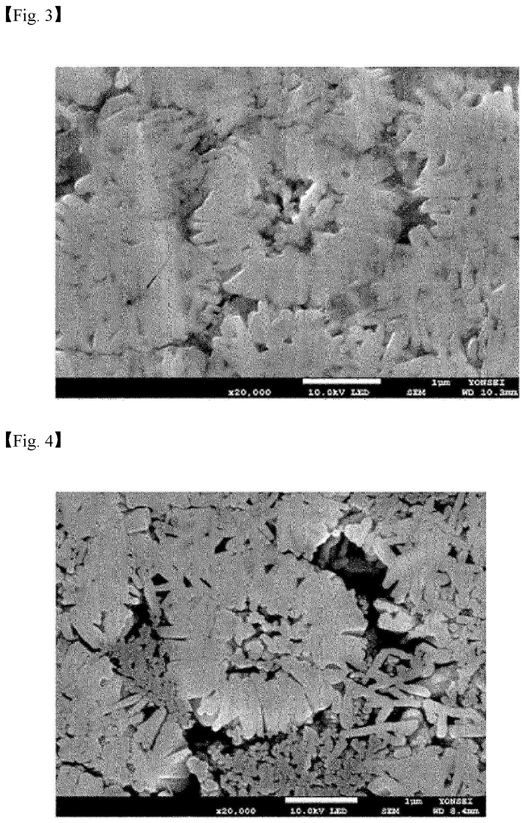

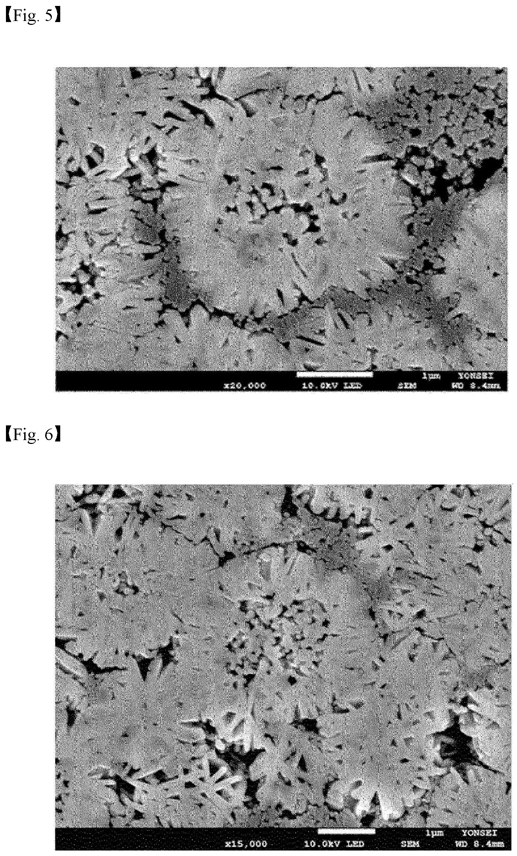

Cross-sectional SEM images of the positive electrode active materials of Examples 1 to 5 and Comparative Example 1 were observed after FIB (Focused Ion Beam) milling, and are shown in FIGS. 1 to 6, respectively, in order.

Referring to FIGS. 1 to 6, it was confirmed that the positive electrode active materials of the Examples and Comparative Example were secondary particles formed by aggregation of plate-like primary particles, and had a structure in which a hollow was formed in the middle of the secondary particles.

### Experimental Example 2: Evaluation of Physical Properties of Positive Electrode Active Materials

### (1) Evaluation of Stabilization Energy of Dopant in Lithium Layer and Preference for Lithium Layer or Transition Metal Layer

Using a VASP program, unit cells having a total number of 150 atoms were configured, dopants were placed in the lithium layer and the transition metal layer, respectively, and the energy of each was calculated. The stabilization energy of the dopant in the lithium layer was evaluated from an energy difference between the two structures.

### (2) Evaluation of Average Spacing Between Lithium Layers (Before Charging)

The average spacing between lithium layers of each synthesized sample was evaluated using XRD.

### (3) Evaluation of Transition Metal Ratio in Lithium Layer After Full Charge (Charge End Voltage: 4.65 V)

The transition metal ratio in the lithium layer after full charge at a charge end voltage of 4.65 V was evaluated using XRD.

**[Table 2]**

| | Stabilization Energy of Dopant in Lithium Layer (eV) | Doping Site Preference of Doping Element | Average Spacing Between Lithium Layers (Å) | Transition Metal Ratio in Lithium Layer After Full Charge (%) |
|---|---|---|---|---|
| Example 1 | -0.1 | Lithium layer, transition metal layer | 2.1382 | 7.3 |
| Example 2 | -0.48 | Lithium layer | 2.1474 | 7.5 |
| Example 3 | -0.81 | Lithium layer | 2.1519 | 7.5 |
| Example 4 | -0.73 | Lithium layer | 2.1531 | 7.2 |
| Example 5 | -1.29 | Lithium layer | 2.1582 | 7.1 |
| Example 6 | -0.74 | Lithium layer | 2.1511 | 7.7 |
| Example 7 | -0.54 | Lithium layer | 2.1474 | 7.5 |
| Comparative Example 1 | - | - | 2.1175 | 10.4 |
| Comparative Example 2 | 0.93 | Transition metal layer | 2.1168 | 9.8 |
| Comparative Example 3 | 1.21 | Transition metal layer | 2.1217 | 9.5 |
| Comparative Example 4 | 1.13 | Transition metal layer | 2.1183 | 9.7 |
| Comparative Example 5 | 1.58 | Transition metal layer | 2.1199 | 9.9 |
| Comparative Example 6 | 0.85 | Transition metal layer | 2.1174 | 10.3 |
| Comparative Example 7 | 1.32 | Transition metal layer | 2.1164 | 9.9 |
| Comparative Example 8 | -0.48 | Lithium layer | 2.1211 | 9.2 |
| Comparative Example 9 | -0.13 | Lithium layer, transition metal layer | 2.1242 | 9.1 |
| Comparative Example 10 | -0.48 | Lithium layer | 2.1284 | 8.9 |

Referring to Table 2, it was confirmed that, in the case of Examples 1 to 7 in which overall process conditions including the type and content of the doping element were appropriately controlled, overall physical properties such as the average spacing between lithium layers were appropriately obtained within the ranges according to the present invention. In contrast, in the case of Comparative Examples 1 to 7 in which there was no doping element or the type of doping element was outside the range according to the present invention, it was confirmed that overall physical properties including the average spacing between lithium layers were outside the ranges according to the present invention.

In addition, in the case of Comparative Example 8, although the type of doping element was appropriate, because the doping amount was too small, it was confirmed that the average spacing between lithium layers was too narrow and the transition metal ratio in the lithium layers after full charge was too high.

In addition, in the case of Comparative Example 9, although the type and content of the doping element were appropriate, because the cobalt content of the base material was too high, it was confirmed that the average spacing between lithium layers was too narrow and the transition metal ratio in the lithium layers after full charge was too high.

In addition, in the case of Comparative Example 10, although the type and content of the doping element were appropriate, because the average particle diameter (D50) of the doping raw material was too large, it was confirmed that the average spacing between lithium layers was too narrow and the transition metal ratio in the lithium layers after full charge was too high.

### Experimental Example 3: Evaluation of Electrochemical Characteristics of Lithium Secondary Batteries

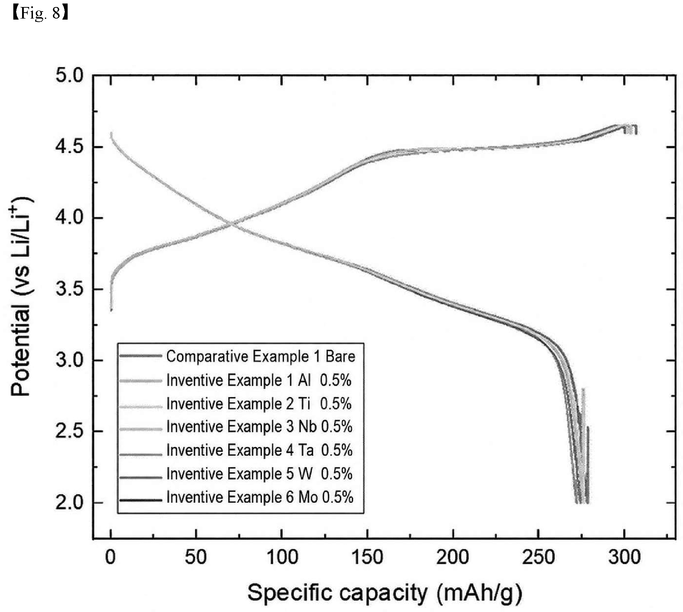

Electrochemical characteristics of the lithium secondary batteries manufactured according to the Examples and Comparative Examples were evaluated, and are shown in Table 3 and FIGS. 8 to 11 below.

### (1) Evaluation of Initial Capacity and Initial Efficiency

After lithium secondary battery half cells were manufactured and aged at 25°C for 24 hours, a charge/discharge test was performed at 45°C. For initial capacity evaluation, 200 mAh/g was used as a reference capacity, and charging was performed to 4.65 V at a constant current of 0.1 C, followed by switching to constant voltage, and charging was continued until the end current reached 0.05 C. After charging, a rest time of 10 minutes was provided, and discharge was performed to 2.0 V at a constant current of 0.1 C based on a reference capacity of 200 mAh/g. At this time, a charge/discharge graph is shown in FIG. 8.

### (2) Evaluation of High-Temperature Lifespan Characteristics (45°C, 50 Cycles)

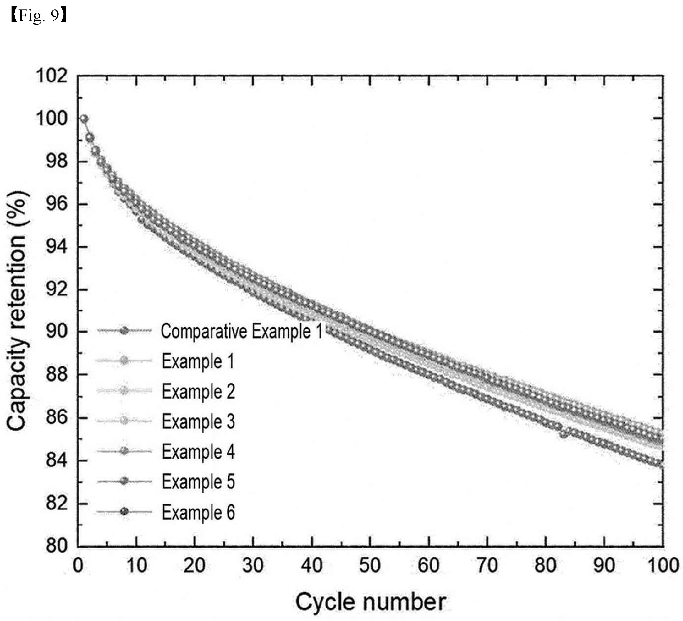

After lithium secondary battery full cells were manufactured, charging was performed at 45°C to 4.6 V at a constant current of 0.5 C, followed by switching to constant voltage, and charging was performed until the end current reached 0.05 C. After charging, a rest time of 10 minutes was provided, and discharge was performed to 2.5 V at a constant current of 0.5 C. Charging and discharging were performed 100 times under such charge/discharge cycle conditions, and a capacity retention rate of the 100th cycle relative to the first cycle was calculated. At this time, a lifespan retention rate graph is shown in FIG. 9.

### (3) Evaluation of Transition Metal Dissolution Amount After High-Temperature Cycles (45°C, 50 Cycles)

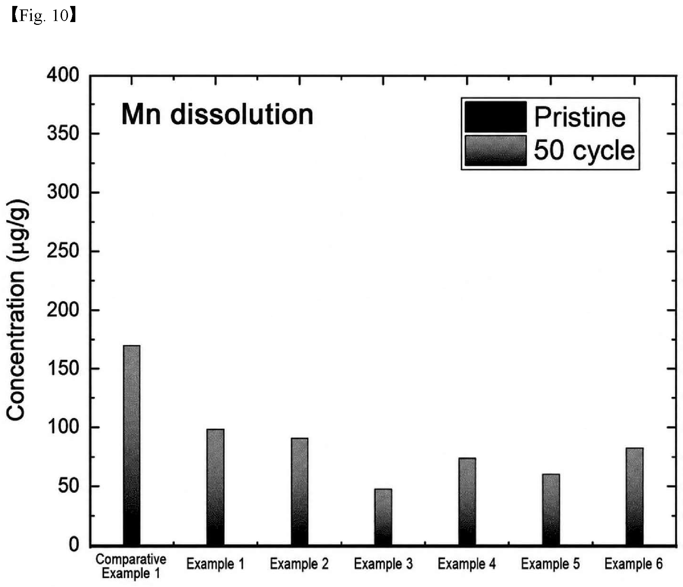

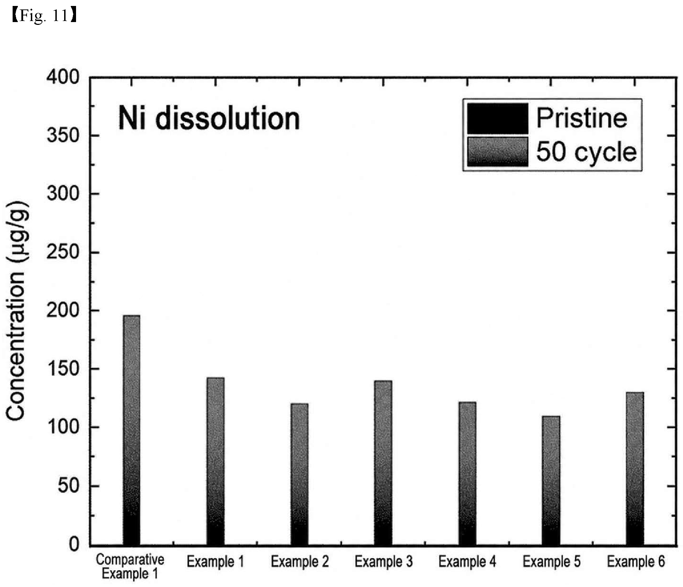

After high-temperature cycles were performed using full cells, cells were disassembled after 100 cycles for each set, the negative electrode was collected, and dissolution amounts of Mn and Ni were evaluated by ICP. The results are shown in FIG. 10 (Mn dissolution amount) and FIG. 11 (Ni dissolution amount).

**[Table 3]**

| | Initial Charge | Initial Discharge | Initial Efficiency (%) | High-Temperature | Mn Dissolution | Ni Dissolution |
|---|---|---|---|---|---|---|
| | Capacity (mAh/g) | Capacity (mAh/g) | | Lifespan Characteristics (%) | Amount (µg/g) | Amount (µg/g) |
| Example 1 | 298.2 | 276.4 | 92.7 | 85.3 | 99.0 | 142.1 |
| Example 2 | 298.1 | 277.5 | 93.1 | 84.7 | 91.1 | 120.3 |
| Example 3 | 297.2 | 276.1 | 92.9 | 84.8 | 48.0 | 139.7 |
| Example 4 | 299.2 | 275.9 | 92.2 | 84.9 | 74.1 | 121.4 |
| Example 5 | 300.9 | 276.8 | 92.0 | 85.0 | 60.6 | 109.4 |
| Example 6 | 298.9 | 277.7 | 92.9 | 84.8 | 83.4 | 110.3 |
| Example 7 | 304.1 | 277.3 | 91.2 | 84.6 | 74.6 | 129.6 |
| Comparative Example 1 | 306.4 | 278.2 | 90.8 | 83.7 | 170.6 | 195.2 |
| Comparative Example 2 | 306.2 | 277.8 | 90.7 | 83.8 | 170.0 | 188.2 |
| Comparative Example 3 | 305.3 | 275.7 | 90.3 | 83.1 | 169.2 | 202.2 |
| Comparative Example 4 | 308.8 | 274.4 | 88.9 | 82.5 | 175.7 | 190.1 |
| Comparative Example 5 | 305.5 | 271.7 | 88.9 | drop | 174.7 | 217.2 |
| Comparative Example 6 | 303.8 | 272.0 | 89.5 | 72.6 | 168.4 | 206.4 |
| Comparative Example 7 | 308.5 | 270.7 | 87.7 | 68.2 | 187.3 | 198.8 |
| Comparative Example 8 | 299.8 | 276.2 | 92.1 | 83.2 | 125.3 | 156.3 |
| Comparative Example 9 | 286.2 | 258.8 | 90.4 | 84.4 | 135.6 | 173.7 |
| Comparative Example 10 | 307.2 | 276.2 | 89.9 | 82.5 | 174.4 | 203.1 |

Referring to Table 3, in the case of the Examples satisfying the physical properties according to the present invention, including the average spacing between lithium layers, it was confirmed that initial efficiency and high-temperature lifespan characteristics were very excellent, and Mn and Ni dissolution amounts were very small, indicating improved structural stability of the positive electrode active material. In contrast, in the case of the Comparative Examples in which the average spacing between lithium layers and other physical properties of the positive electrode active material were outside the ranges according to the present invention, it was confirmed that initial efficiency or high-temperature lifespan characteristics were inferior to those of the Examples, and Mn and Ni dissolution amounts were remarkably greater than those of the Examples, indicating deterioration of structural stability of the positive electrode active material.

Although preferred embodiments of the present invention have been described above, the present invention is not limited thereto, and various modifications may be made and practiced within the scope of the claims, the detailed description of the invention, and the accompanying drawings, and such modifications also naturally fall within the scope of the present invention.

Accordingly, the substantial scope of rights of the present invention should be defined by the appended claims and equivalents thereof.

## Claims

1. A positive electrode active material for a lithium secondary battery, comprising a lithium metal oxide having a lithium- and manganese-rich composition,
wherein the lithium metal oxide has a structure in which lithium layers and transition metal layers are alternately stacked, and an average spacing between the lithium layers is 2.13 Å or more, and
wherein the lithium metal oxide has a molar ratio of cobalt to metals excluding lithium of 0.05 or less.

2. The positive electrode active material for a lithium secondary battery of claim 1,
wherein the lithium metal oxide has a molar ratio of lithium to the lithium metal oxide of 1.1 to 1.3, and a molar ratio of manganese to metals excluding lithium of 0.55 to 0.7.

3. The positive electrode active material for a lithium secondary battery of claim 1,
wherein, after first full charge, the lithium metal oxide has a transition metal ratio in the lithium layers of 8.0% or less.

4. The positive electrode active material for a lithium secondary battery of claim 1,
wherein the lithium metal oxide is doped with a transition metal element having no valence electron in a d orbital (dopant).

5. The positive electrode active material for a lithium secondary battery of claim 4,
wherein a stabilization energy of the dopant in the lithium layers is less than 0 eV.

6. The positive electrode active material for a lithium secondary battery of claim 4,
wherein the transition metal element having no valence electron in a d orbital is Al, Ti, Nb, Ta, W, Mo, or a combination thereof.

7. The positive electrode active material for a lithium secondary battery of claim 4,
wherein the transition metal element having no valence electron in a d orbital is more heavily doped into the lithium layers among the lithium layers and the transition metal layers.

8. The positive electrode active material for a lithium secondary battery of claim 4,
wherein a content of the transition metal element having no valence electron in a d orbital is 0.2 mol% to 1 mol% based on a total number of moles of metals excluding lithium.

9. The positive electrode active material for a lithium secondary battery of claim 1,
wherein the lithium metal oxide has a molar ratio of nickel to metals excluding lithium of 0.3 to 0.45.

10. The positive electrode active material for a lithium secondary battery of claim 1,
wherein the lithium metal oxide comprises a first lithium metal oxide and a second lithium metal oxide, and
wherein an average particle diameter (D50) of the first lithium metal oxide is greater than an average particle diameter (D50) of the second lithium metal oxide.

11. The positive electrode active material for a lithium secondary battery of claim 1,
wherein the lithium metal oxide is represented by the following Chemical Formula 1:
[Chemical Formula 1] Li₁₊ₐ(NiₓCo_{y}Mn_{z}M1_{w1}M2_{w2})₁₋ₐO₂
wherein, in Chemical Formula 1, 0.1≤a≤0.3, 0.3≤x≤0.45, 0≤y≤0.05, 0.55≤z≤0.7, 0.002≤w1≤0.01, 0≤w2≤0.01, x+y+z+w1+w2=1, M1 is Al, Ti, Nb, Ta, W, Mo, or a combination thereof, and M2 is Zr, B, Y, Mg, Sc, Si, V, Fe, Ce, Hf, La, Sr, Sn, Sb, Zn, Cu, Ge, Ru, Ir, or a combination thereof.

12. A positive electrode for a lithium secondary battery, comprising the positive electrode active material of any one of claims 1 to 11.

13. A lithium secondary battery comprising the positive electrode for a lithium secondary battery of claim 12.
